# EUROPEAN PATENT SPECIFICATION

(11) **EP 1 411 745 B1**
(45) Date of publication and mention of the grant of the patent: **08.08.2007**
(21) Application number: 02292555.6
(22) Date of filing: 16.10.2002
(51) Int. Cl.: H04Q 11/04, H04J 3/16

(54) **Packet switching for packet data transmission systems in a multi-channel radio arrangement**
Paketvermittlung für Paketdatenübertragungssysteme in einer Multikanalfunkanordnung
Commutation par paquets pour des systèmes de transmission de paquets de données dans un arrangement radio à canaux multiples

(43) Date of publication of application: 21.04.2004
(73) Proprietor: Alcatel Lucent, 75008 Paris (FR)
(72) Inventor: Colombo, Claudio, 20046- Biassono (Milano) (IT)
(74) Representative: Shamsaei Far, Hassan

(56) References cited:
- EP-A- 0 157 412
- EP-A- 0 982 900
- WO-A-00/24217

## Description

The present invention relates to the field of wireless transmissions, both of point-to-point and point-to-multipoint type. More in particular, the present invention relates to multi-channel wireless transmission systems transmitting packet data signals. Still more in particular, the present invention relates to a mechanism operating a novel packet switching.

In the field of radio systems, multi-channel systems are known and widely used. In multi-channel protected arrangements a number *n* of working channels and one (or more) spare channel are provided. Typical configurations are *n*+*1* (*n* working channels and one protecting channel) or *n*+*2* (*n* working channels and two protecting channels).

Many of the above systems are presently used also for transmitting packet data signals, namely signals arranged in the form of data packets. Typical data packet signals comprise Ethernet or fast Ethernet signals.

At present, the transport of packet data signals in a multi-channel radio system is performed by means of SDH/SONET Virtual Concatenation. For instance, by using a *n*+*1* radio channel configuration (*n* working channels + one spare channel for protection), the transport of data frames is performed in the following manner:
- the bytes of one frame are distributed among all the SDH/SONET Virtual Containers and transmitted through the n working channels;
- a dedicated radio channel is reserved for the protected configuration of the system against atmospheric phenomena of attenuation, reflections or radio channel noise;
- due to the fact that the SDH/SONET Virtual Containers can follow different paths, at the ending point the Virtual Containers should be re-aligned;
- the bytes of the data frames are extracted from the re-aligned Virtual Containers and the frame is re-assembled.

In case of degradation or failure of one working channel, the packet data traffic needs to be switched on the spare channel in order to avoid the loss of the whole traffic distributed on the interested Virtual Container, resulting in that the whole traffic becomes unavailable (the bytes of one frame are distributed among all the virtual containers.

The above procedure has several disadvantages. The first disadvantage is that the system needs further hardware to work. For sure, it needs a switching equipment to provide the protection of the working channels (TX/RX distributors, a controller, ...). Furthermore, proper switching criteria should be detected

A further disadvantage lies in that the available bandwidth is reduced, due to the need to reserve (at least) one spare channel dedicated to the switching performance.

A further disadvantage is that, in case of sudden break of one channel (namely a non predictable failure), all the messages whose bytes transit in the fail-affected Virtual Containers will be lost.

In view of the above disadvantages, the main object of the present invention is overcoming them and providing a new method and apparatus performing a switching in a packet data transmission system in a multi-channel radio arrangement.

The problem to solve is how to transport packet data streams (for instance Ethernet frames) by means of two or more SDH/SONET Virtual Containers in a multi-channel radio arrangement.

This means that a dedicated link of two or more SDH/SONET Virtual Containers should be provided for the transport of Ethernet frames in a wireless point-to-point connection. The task is to perform this type of transport in the best way, with an optimisation of the required microwave bandwidth and using a protection scheme without dedicated spare channels or any other hardware equipment.

The above and further objects are obtained by a method according to claim 1 and an apparatus according to claim 4. Further advantageous features of the present invention are set forth in the respective dependent claims. All the claims are considered as an integral portion of the present description

According to the present invention, a packet switching is implemented.

A radio communication System is known from EP-A-0 157 412 in which attempt is made for improving the utilization of transmission resources. In order to achieve such improvement, this document proposes the use of a spare channel or protection channel. Therefore under normal conditions, where all the channels are transmitted without failure, the spare channel is also used for data transmission. This document however does not teach the feature of assigning the entire transport of each data packet to one radio channel

EP-A-0 982 900 discloses a frame based data communications network a over SDH in which frame based data are incorporated directly into virtual containers without encapsulation in an intermediate protocol. The document attempts to provide a solution for the problems associated to mis-match in data rates between conventional datacoms protocols as used in LANs and WANs and conventional telecoms protocols. This document however does hot address the problem of degradation of channels during radio transmission due to phenomena such as multi-path fading.

WO 00/24217 discloses a system and method of transferring data to and from a mobile station in a cellular telecommunications network. In order to transfer data, the mobile station simultaneously seizes additional voice channels or control channels, fills time slots with data packets. Each packet is assigned with an identification information related to the order and the destination of the packet. The mobile station then asynchronously transmits then data packets over the plurality of channels in order to increase the data transfer rate. At the final destination, the data packets are assembled in numerical order by packet and delivered to the user. Likewise the previously cited document, this document does not address the problem of degradation of channels during radio transmission due to phenomena such as multi-path fading.

The basic idea is to assign the transport of a data packet to a single Virtual Container. This means that different Virtual Containers concurrently transport different frames. With the Virtual Concatenation, all the Virtual Containers concurrently transport the same frame.

The present invention will become clear from the following detailed description, given by way of non limiting example, to be read with reference to the attached drawings, wherein:
- Fig. 1 diagrammatically shows how packet messages are sent using virtual concatenation, according to the state of the art;
- Fig. 2 shows the arrangement of Fig. 1 in case of a sudden break of a channel;
- Fig. 3 diagrammatically shows how packet messages are sent using the packet switching mechanism according to the present invention;
- Fig. 4 shows the arrangement of Fig. 3 in case of a sudden break of a channel;
- Fig. 5 shows in greater detail how a multi-channel radio system for transmitting packet frame signals could be implemented according to the state of the art;
- Fig. 6 shows the multi-channel switching arrangement, both TX and RX sides, that is used in the system of Fig. 5;
- Fig. 7 shows the multi-channel packet-data switching arrangement according to the present invention; and
- Fig. 8 shows the arrangement of Fig. 7 in case of failure.

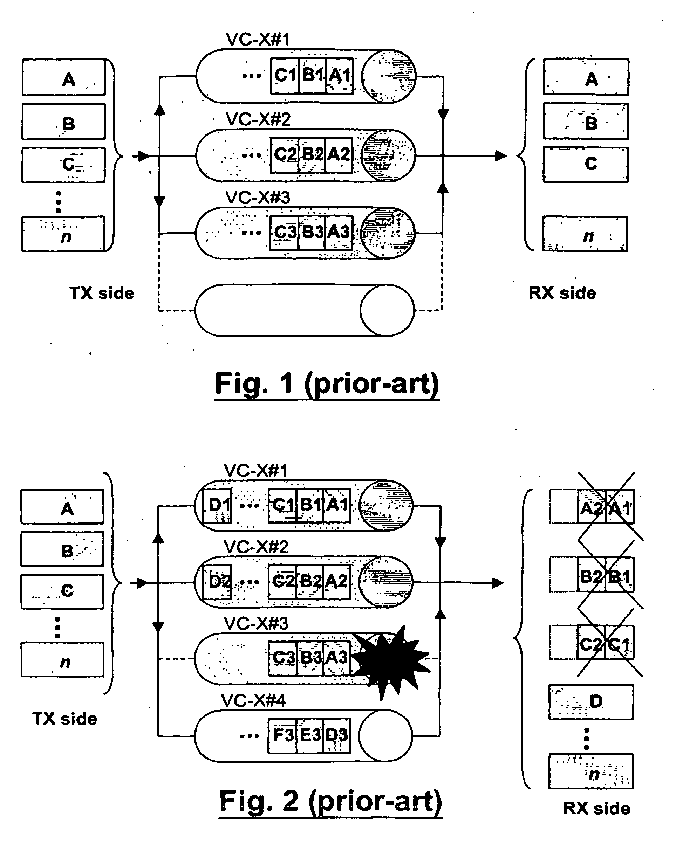

Reference should be made first to Fig. 1 diagrammatically showing how packet messages are transmitted using virtual concatenation, according to the state of the art. At the transmission side there are a number of packets (A, B, C, ..., n) to be transmitted. According to the virtual concatenation, each one of these packets is distributed among the available working resources/channels. Thus, in other words, if, for instance, the configuration is a "3 + 1" (three working channels and one spare channel), packet A is divided (for instance in a bit-by-bit wise) into three portions A1, A2, A3, and each portion is transported through one of the three different working channels (VC-X#1, VC-X#2, VC-X#3). In a free-of-failure condition, the spare channel is not used and it is in a standby status. In this and in the following figures, the working channels are shown as gray tubes while the spare/protection channels are white tubes.

The Virtual Concatenation foresee that a transported message is divided between the different Paths composing the Pipe. The original message is inserted inside the available VCs assigning a single byte for every available VC until the sending bytes are terminated. In receiving side, the receiver must realign the VCs before the original message is extracted.

The main characteristics of this technique are:
- all the bandwidth is used to transport every single message;
- if a VC payload is lost, the whole message is lost;
- it is necessary to provide the VCs re-alignment before extracting the message.

When the transmission quality in a channel degrades and a fail is expected, the spare channel is switched on. Such a switching mechanism is hitless and no packets is lost.

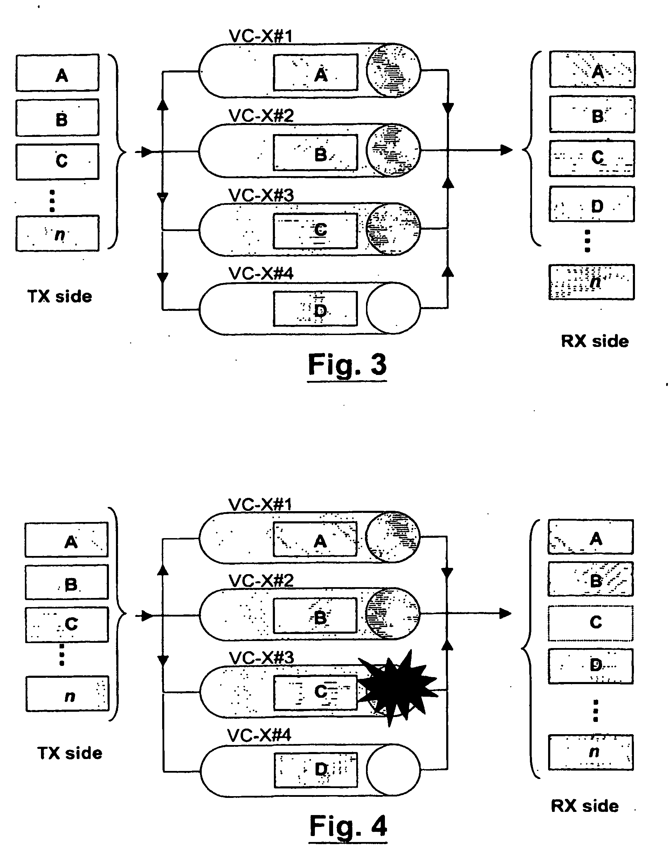

Also in case an unexpected break of the working channels (see Fig. 2) occurs, the spare channel is activated replacing the failed working channel but all the packets partially transported by the failed channel are not usable because they are not complete. Furthermore, as it will become clear from the following description of other prior-art figures, additional hardware should be provided but such an additional hardware remains unemployed most of the time. In addition, it is clear that in case of failure also in the spare channel (in addition to a working channel), all the radio link becomes not usable.

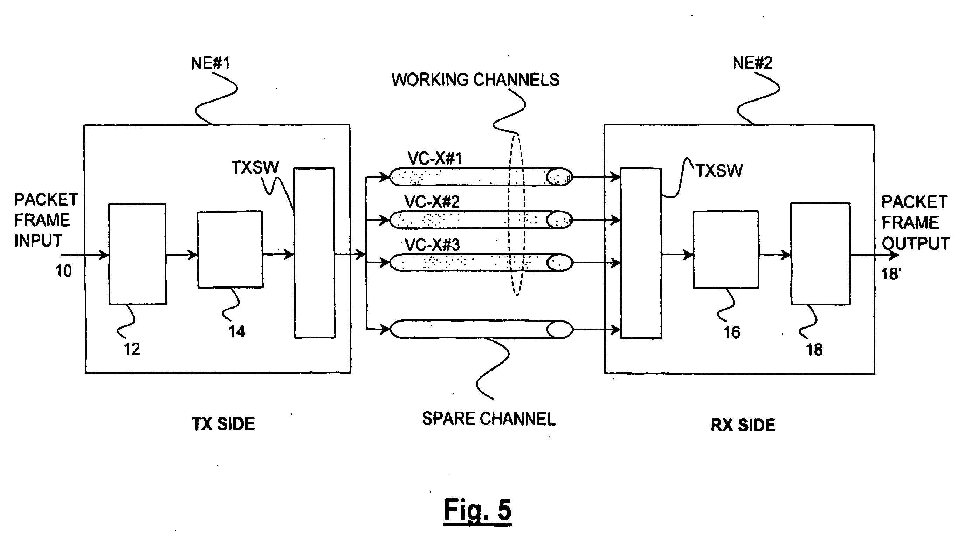

Fig. 5 shows in greater detail how a rnutti-channet radio system for transmitting packet frame signals could be implemented according to the state of the art. A flow of packet frames to be transmitted enter a first network element, say NE#1. The packet frames 10 are sent first to a queue of incoming frames block 12 storing queues of packets, then to a dispatcher 14 and finally to a TX switching equipment TXSW.

In the reception side, the packet frames are received by a corresponding RX switching equipment RXSW providing its output to a frame re-ordering block 16. The frame re-ordering block 16 in its turn, feeds a queue of outgoing frames block 18 whose output are the original packet frame signals.

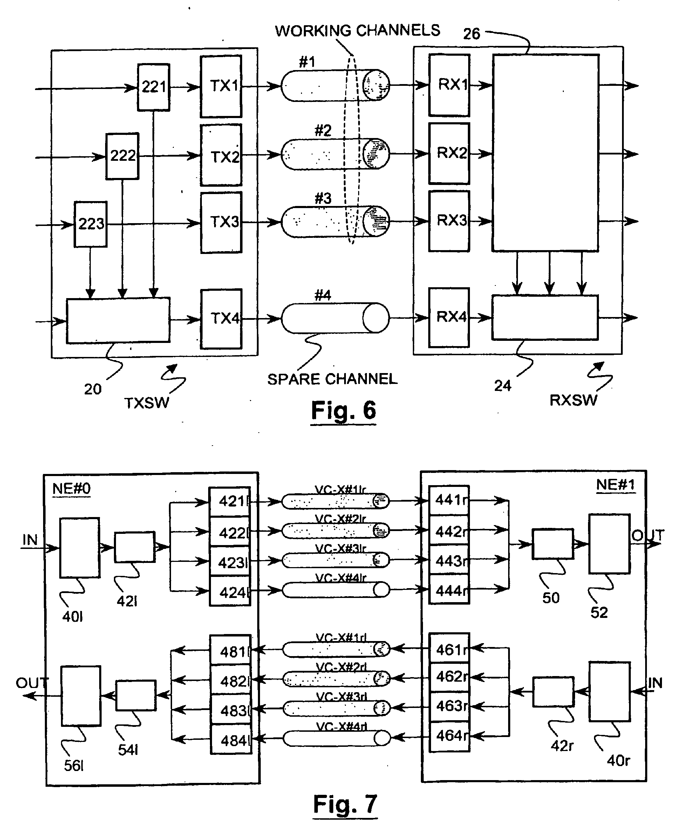

The TX and RX switching equipments TXSW, RXSW are shown in greater detail in Fig. 6. The TX switching equipment TXSW comprises *n* +*1* (thus, in the present example, 3+1=4) radio TX apparatuses TX1, TX2, TX3, TX4. The TX switching equipment further comprises a TX distributor 20 and n hybrid components 221, 222, 223. Both the TX distributor 20 and hybrid components 221-223 are fed by the dispatcher of frames block 14 and feed the respective TX apparatus TX1 - TX4. The hybrid components 221-223 bridge the received data packets to the TX distributor 20 so that, in case of failure, the TX apparatus TX4 of the spare channel #4 will be able to replace the TX apparatus of the failed channel.

The RX switching equipment RXSW, correspondingly, comprises *n* +*1* (thus, in the present example, 3+1=4) radio RX apparatuses RX1, RX2, RX3, RX4. The RX switching equipment further comprises a RX distributor 24. The output of the radio RX apparatuses RX1-RX3 feed a hitless switch 26 connected with the RX distributor 24.

It is known that on radio-relay links, fading initially causes a deterioration in transmission quality finally leading to an interruption. Thus, if a high-speed quality monitor apparatus were used to switch, without a slip in bit count, to a better protection channel before the signal is interrupted, it would be possible to avoid any interruptions.

In order to operate as a countermeasure against multipath fading, the switching system must operate in a truly "error free hitless" mode, preserving the "bit count integrity" of the output bit stream, and the overall switching time must be short enough to counteract fast fading events.

In order to operate "error free" switching and to maintain the "bit count integrity" even in the case of severe multipath fading, two fundamental requirements must be fulfilled:
- the switching system must compensate for the different and time-varying transmission delays on the working channel and on the protection channel: a fast delay adjustment procedure is required before switching.
- the overall switching sequence must be completed before the "outage BER" threshold is reached.

With reference to the functional block diagram of *n+1* hitless switch shown in Figures 5 and 6, when fading occurs in the working channel and a quality threshold is exceeded, the TX distributor 20 bridges the protection channel to the failure affected channel.

Thus, the same signal is then present at both inputs of hitless switch in the degraded working channel and an alignment procedure can start.

After the two signals have been aligned, it is possible to switch (select) from the working to the protection channel in a completely error free mode. As restoral from the protection channel to the working channel is effected in the same way, it is also hitless.

In case of multi-line switching, one or p (p>1) protection radio channels are prepared for n working channels. When one of the n working channels is interrupted, the signal in the interrupted channel will immediately be recovered by one of the protection channels over m radio hops.

The basic idea of the present invention is shown in Figures 3 and 4. It fundamentally consists in assigning the transport of a data packet frame to a single Virtual Container VC.

This means that different Virtual Containers concurrently transport different frames. On the contrary, through the Virtual Concatenation, all the Virtual Containers concurrently transport the same frame, as said above.

Independent basic pipelines make up the pipe and every pipeline transports a subset of packet data frames assigned to the complete pipe. Through the Virtual Concatenation, every frame is transported by the complete pipe. This type of concatenation has been named "Packet Concatenation".

The packet concatenation does not provide any information fragmentation, but sends a single different message over a single available Path for a specific available Pipe.

The main characteristics of this technique are:
□ a single Path is used to transport a single message;
□ in case of a sudden break of a channel (see Fig. 4), the other messages sent over the other Paths of the same Pipe are considered "valid", because the data transported by every Path are un-correlated from those transported by the other Path of the same Pipe. Obviously, in case of a degradation of a channel, a full hitless switch is performed and no packets are lost.
o it is necessary a re-ordering of the messages transported by different Path, to restore the original sequence.

Fig. 7 depicts a link from a first Network Element, NE#0, to a second Network Element, NE#1, according to the present invention. The link is made up of four Virtual Containers VC-X#1 - VC-X#4 in a 4+0 multi-channel radio configuration (all the available microwave bandwidth is reserved for data transmission, without any spare channel).

The incoming packet data frames (for instance a sequence of frames labelled as A, B, C, D, E, etc..) are stored into a queue buffer 40l providing them to a dispatcher 421. The dispatcher 42l provides its output to four (one for each channel) path source functional blocks 421l, 422l, 4231, 4241 that manage the insertion of a packet data frame into a Virtual Container. Analogously, at the receiving side (NE#1), there are four (one for each channel) path sink functional blocks 441 r, 442r, 443r, 444r that manage the extraction of a packet data frame from a Virtual Container, a block 50 for reordering the received frames and a queue buffer 52. The "I" suffix of blocks of Network Element #0 stands for "left"; the "r" suffix of blocks of Network Element #1 stands for "right".

Also NE#1 is provided with a queue buffer 40r, a dispatcher 42r and four path source functional blocks 461 r, 462r, 463r, 464r. In NE#0 there are four path sink functional blocks 481l, 482l, 4831, 4841, a block 54 for reordering the received frames and a queue buffer 56.

The transport of these frames is performed according to the following steps:
1. The dispatcher 42l assigns a frame to every Virtual Container: for instance frame A is assigned to VC-X#1lr, frame B to VC-X#2lr, frame C to VC-X#3lr and frame D to VC-X#4lr. A sequence label/number is attached to every frame in this stage.
2. Every VC performs the transport of the assigned packet data frame.
3. Due to the fact that different Virtual Containers along different paths concurrently transport different frames, at the ending point the received frames must be re-ordered according to their sequence label/number. Let consider that the sequence of frames received at the ending point is B, D, A and C. After the reception of frame A, both frames A and B can be stored in the outgoing queue to be transmitted. After the reception of frame C also frames C and D can be stored in the same queue to be transmitted.
4. The next frame E of the queue of incoming frames is assigned to one of the four Virtual Containers VC-X#1; e.g. it could be assigned to the first VC that has completed the transport of currently assigned frame. The same for the following incoming packet data frames.

Steps from 2 to 4 are repeated.

In the previous example the criterion of assignment of a frame to a VC is very simple: a frame is assigned to the first available VC.

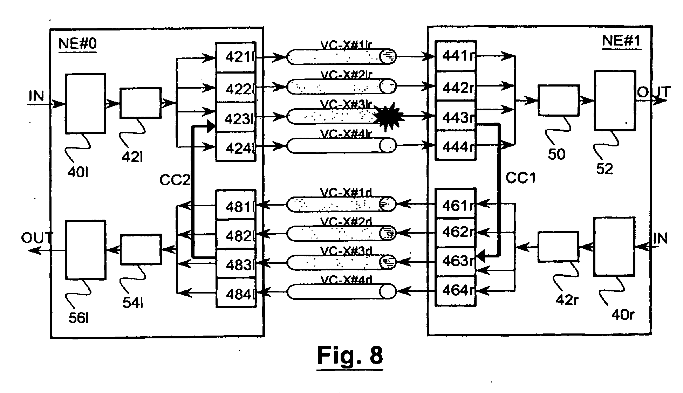

According to the present invention (see Fig. 8), in case of failure of a Virtual Container (e.g. VC #3) due to a degradation or failure of the radio channel #3, it can be removed from the pipe and the remaining Virtual Containers (i.e. VC #1, VC#2 and VC#4) perform the Packet Concatenation.

Advantageously, a failure on a working channel does not lead to the complete loss of the traffic but just to a bandwidth reduction.

The description of how the removal of a failed Virtual Container is performed will be provided now with reference to Figures 7 and 8.

Figures 7 and 8, as said above, depict the two functional blocks that manage the insertion and extraction of a packet data frame into a Virtual Container: Path source (421l-424l ; 461r-464r) and Path sink (441r-444r; 481l-484l). Let consider as an example a failure occurred on the working channel #3 involving the transmission of VC-X #3lr (from NE #0 to NE #1).

Path sink 443r detects the failure and provides the related information to Path source 463r through a proper communication channel CC1; the transmission of packet data frames on VC-X #3rl is disabled and just status information are forwarded to Path sink 4831 by means of the VC-X #3rl itself.

The failure information are received by Path sink 4831 and forwarded to Path source 4231 through a proper communication channel CC2. Path source 4231, in its turn, disables the transmission of packet data frames. At this stage, the VC-X #3 is completely disabled in both directions and this condition will remain until the disappearance of failure detection.

In the previous example, the occupied bandwidth dimension is dynamically modified in order to recover from a failure. The dynamic modification of the spectral occupation can be performed also in absence of failure just to increase/decrease the link capability; this feature is performed by the same communication channels CC1, CC2 already described and without any loss of packet data frames.

As already described, the present invention provides the following main advantages:
- The system does not require a dedicated spare channel to protect a single working channel transporting a VC against degradation or failure of the radio channel. This results in an efficient bandwidth utilisation for data traffic, because all the assigned channels of the channelling arrangement can be used for the transmission.
- No switching equipment or algorithm is necessary for protection operation.
- In case of failure of one Virtual Container, the bandwidth is reduced (to the same level as in the prior art) but the traffic is not completely lost.
- A dynamic modification of the pipe dimension without any traffic loss is possible.

## Claims

1. Method for transmitting/receiving data packet frames in a multi-channel wireless transmission system, the method comprising the steps of deceiving by a first network element (NE#0) a plurality of data packets (A, B, C, ...) to be radio transmitted to a second network element (NE#1); and providing a number (*n* and *p*) of radio channels (VC-X#1, VC-X#2, ...) for performing the transmission, the radio channels including one or more working channels (*n*) and one or more protection channels (*p*) wherein in absence of failures of a radio channel in transmission, the transmission is performed by using all the available working and protection channels, **characterized by** the step of assigning the entire transport of each data packet (A, B, C, ...) to one radio channel (VC-X#1, VC-X#2, ...) and the step of, in case a radio channel becomes affected by a failure in at least one direction, disabling the failure-affected channel (VC-X#3lr) in the opposite direction and assigning the entire transport of each of the further single data packets (A, B, C, ...) to corresponding single radio channels (VC-X#1, VC#X-2, ...) of the remaining unfailed radio channels.

2. Method according to claim 1, **characterized by** the step of, attaching at the transmitting side, a sequence label/number to every data packet (A, B, C, ...) that is transmitted and, reordering at the receiving side, the data packets according to the proper sequence label/number.

3. Method according to claim 1, **characterized in that** the step of disabling the failure-affected channel comprises the steps of: detecting that a channel has become affected by a failure; communicating (443r), through a first communication channel (CC1), the channel failure to a corresponding path source block (463r); transferring the failure information to the corresponding path sink block (483l) ; and finally forwarding the failure information to the path source block (423l) of the transmitting side through a second communication channel (CC2).

4. Apparatus for transmitting/receiving data packet frames in a multi-channel wireless transmission system comprising a number (*n* and *p*) of radio channels (VC-X#1, VC-X#2, ...) for performing the transmission, the radio channels including at least one working channel and at least one protection channel wherein in absence of failures of a radio channel in transmission, the transmission is performed by using all the available working and protection channels, the apparatus (NE#0, NE#1) comprising interfaces for receiving a plurality of data packets (A, B, C, ...) to be radio transmitted and interfaces for outputting by radio transmission to a remote radio apparatus, packets that have been received from the remote radio apparatus; a number (*n* and *p*) of transmitters (421l-424l; 461 r-464r); and a corresponding number (*n* and *p*) of receivers (441r-444r; 481l-484l), **characterized by** further comprising a dispatcher (42l; 42r) adapted for assigning each packet (A, B, C, ...) to a transmitter so that the entire transport of each data packet (A, B, C, ...) is made by one radio channel (VC-X#1, VC-X#2, ...) ; and means provided for disabling, in case a radio channel becomes affected by a failure in at least one direction the failure-affected channel (VC-X#3lr) in the opposite direction and assigning the entire transport of each of the further single data packets (A, B, C, ...) to corresponding single radio channels (VC-X#1, VC#X-2, ...) of the remaining unfailed radio channels.

5. Apparatus according to claim 4, **characterized in that** it further comprises a communication channel (CC1; CC2) for reporting channel failure information between a transmitter (421l-424l; 461r-464r) and a receiver (441 r-444r; 481l-484l).

## Patentansprüche

1. Verfahren für Übertragung/Empfang von Datenpaketrahmen in einem Multikanal-Funkübertragungssystem, wobei das Verfahren die Schritte zum Empfang einer Vielzahl von Datenpaketen (A, B, C, ...) in einem ersten Netzelement (NE#0), die an ein zweites Netzelement (NE#1) übertragen werden sollen, und die Bereitstellung einer Reihe (*n* und *p*) von Funkkanälen (VC-X#1, VC-X#2, ...) zur DurchfÜhrung der Übertragung umfasst, wobei die Funkkanäle einen oder mehrere Betriebskanäle *(n)* sowie einen oder mehrere Sicherungskanäle (*p*) umfassen, wobei die Übertragung beim Fehlen von übertragungsstörungen in einem Funkkanal durch den Einsatz aller verfügbaren Betriebs- und Sicherungskanäle durchgeführt wird, **gekennzeichnet durch** den Schritt der Zuordnung der vollständigen Übertragung jedes Datenpakets (A, B, C, ...) zu einem Funkkanal (VC-X#1, VC-X#2, ...) und den Schritt, für den Fall, in dem ein Funkkanal von einer Störung in mindestens einer Richtung betroffen ist, zur Deaktivierung des von der Störung betroffenen Kanals (VC-X#31r) in der umgekehrten Richtung und zur Zuordnung der vollständigen Übertragung jedes der folgenden Datenpakete (A, B, C, ...) zu den entsprechenden Funkkanälen (VC-X#1, VC-X#2, ...) der verbleibenden, nicht gestörten Funkkanäle.

2. Verfahren gemäß Anspruch 1, **gekennzeichnet durch** den Schritt des Anfügens eines Sequezlabels/einer laufenden Nummer an jedes übertragene Datenpaket (A, B, C, ...) auf Sendeseite und der Neuordnung der Datenpakete entsprechend des korrekten Sequenzlabels/der laufenden Nummer auf Empfangsseite .

3. Verfahren gemäß Anspruch 1, **dadurch gekennzeichnet, dass** der Schritt zur Deaktivierung des von der Störung betroffenen Kanals die folgenden Schritte umfasst: Erfassung, dass ein Kanal von einer Störung betroffen ist; Übertragung (443r) der Kanalstörung an den entsprechenden Pfadquellenblock (463r) über einen ersten Übertragungskanal (CC1) ; Übermittlung der Störungsinformationen an den entsprechenden Pfadsenkenblock (4831) und schließlich Weiterleitung der Störungsinformationen an den Pfadguellenblock (423l) der Sendeseite über einen zweiten Übertragungskanal (CC2).

4. Vorrichtung für Übertragung/Empfang von Datenpaketrahmen in einem Multikanal-Fuhkübertragungssystem, das eine Reihe (*n* und *p*) von Funkkanälen (VC-X#1, VC-X#2, ...) zur Durchführung der Übertragung umfasst, wobei die Funkkanäle mindestens einen Betriebskanal sowie mindestens einen Sicherungskanal umfassen, wobei die Übertragung beim Fehlen von Übertragungsstörungen in einem Funkkanal durch den Einsatz aller verfügbaren Betriebs- und Sicherungskanäle durchgeführt, wird, wobei die Vorrichtung (NE#0, NE#1) Schnittstellen zum Empfang einer Vielzahl von Datenpaketen (A, B, C, ...), die per Funk übertragen werden sollen, sowie Schnittstellen zur Ausgabe von Paketen, die von der entfernten Funkvorrichtung empfangen würden, per Funkübertragung an eine entfernte Funkvorrichtung, eine Reihe (*n* und *p*) von Sendern (421l-424l; 461r-464r) und eine entsprechende Anzahl (*n* und *p*) an Empfängern (441r-444r; 481l-484l) umfasst, **dadurch gekennzeichnet, dass** sie zudem einen Dispatcher (42l; 42r) umfasst, der in der Lage ist, jedes Paket (A, B, C, ...) einem Sender zuzuordnen, so dass die vollständige Übertragung jedes Datenpakets (A, B, C, ...) über einen Funkkanal (VC-X#1, VC-X#2, ...) erfolgt; und für' den Fall, in dem ein Funkkanal in mindestens einer Richtung von einer Störung betroffen ist, Einrichtungen zur Deaktivierung des von der Störung betroffenen Kanals (VC-X#31r) in der umgekehrten Richtung und zur Zuordnung der vollständigen Übertragung aller weiteren, einzelnen Datenpakete (A, B, C, ...) zu den entsprechenden einzelnen Funkkanälen (VC-X#1, VC-X#2, ...) der verbleibenden, nicht gestörten Funkkanäle.

5. Vorrichtung gemäß Anspruch 4, **dadurch gekennzeichnet, dass** sie außerdem einen Übertragungskanal (CC1, CC2) zur Übermittlung von Kanal-Störungsinformationen zwischen einem Sender (421l-424l; 461r-464r) und einem Empfänger (441r-444r; 481l-484l) umfasst.

## Revendications

1. Procédé pour transmettre/recevoir des trames de paquets de données dans un système de transmission sans fil à canaux multiples, ce procédé comprenant les étapes consistant à recevoir par un premier élément de réseau (ER#0) une pluralité de paquets de données (A, B, C, ...) à transmettre par des moyens radioélectriques à un deuxième élément de réseau (ER#1), et à fournir un certain nombre (*n* et *p*) de canaux radio (CV-X#1, CV-X#2, ...) pour effectuer la transmission, ces canaux radio utilisant un ou plusieurs canaux normaux (*n*) et un ou plusieurs canaux de protection (*p*), procédé selon lequel, en l'absence de défaillances d'un canal radio en transmission, la transmission est effectuée en utilisant tous les canaux normaux et de protection disponibles, **caractérisé par** l'étape consistant à attribuer le transport tout entier de chaque paquet de données (A, B, C, ...) à un seul canal radio (CV-X#1, CV-X#2, ...) et en l'étape consistant à, au cas où un canal radio devient affecté par une défaillance dans au moins une direction, invalider dans la direction opposée le canal affecté par cette défaillance (CV-X#3gd) et à attribuer le transport tout entier de chacun des autres paquets de données (A, B, C, ...) à des canaux radio correspondants (CV-X#1, CV-X#2, ...) des canaux radio restants non défaillants.

2. Procédé selon la revendication 1, **caractérisé par** l'étape consistant à attacher du côté émission un label/numéro de séquence à chaque paquet de données (A, B, C, ...) qui est transmis, et à réordonner ces paquets de données du côté réception selon le label/numéro de séquence correct.

3. Procédé selon la revendication 1, **caractérisé en ce que** l'étape consistant à invalider le canal affecté par la défaillance comprend les étapes consistant à détecter qu'un canal est devenu affecté par une défaillance , à communiquer (443d), par l'intermédiaire d'un premier canal de commutation (CC1), la défaillance du canal à un bloc source de chemin correspondant (463d) à transférer l'information de défaillance au bloc collecteur du chemin correspondant (483g) : et enfin à retransmettre l'information de défaillance au bloc source du chemin (423g) du côté émission par l'intermédiaire d'un deuxième canal de communication (CC₂).

4. Appareil pour transmettre/recevoir des trames de paquets de données dans un système de transmission sans fil à canaux multiples comprenant un certain nombre (*n* et *p*) de canaux radio (CV-X#1, CV-X#2, ...) pour effectuer la transmission, ces canaux radio comprenant au moins un canal normal et au moins un canal de protection, ce qui fait que, en l'absence de défaillances d'un canal radio en transmission, la transmission est effectuée en utilisant tous les canaux normaux et de protection disponibles, cet appareil (ER#0, ER#1) comprenant des interfaces pour recevoir une pluralité de paquets de données (A, B, C, ...) à transmettre par des moyens radioélectriques et des interfaces pour envoyer par transmission radioélectrique à un appareil radioélectrique distant des paquets qui ont étés reçus de cet appareil radioélectrique distant ; un certain nombre (*n* et *p*) d'émetteurs (421g-424g ; 461d-464d) ; et un nombre correspondant (*n* et *p*) de récepteurs (441d-444d ; 481g-484g), **caractérisé en ce qu'**il comprend en outre un répartiteur (42g; 42d) adapté de façon à attribuer chaque paquet de données (A, B, C, ...) à un émetteur de façon à ce que le transport tout entier de chaque paquet de données (A, B, C,...) soit fait par un seul canal radio (CV-X#1, CV-X#2, ...) ; et un moyen fourni pour invalider, au cas où un canal radio devient affecté par une défaillance dans au moins une direction, le canal affecté par la défaillance (CV-X#3gd) dans la direction opposée et pour attribuer te transport tout entier de chacun des autres paquets de données individuels (A, B, C....) à des canaux radio individuel correspondants (CV~X#1, CV-X#2, ...) des canaux radio non défaillants restants.

5. Appareil selon la revendication 4, **caractérisé en ce qu'**il comprend en outre un canal de communication (CC1 ; CC2) pour signaler une information de défaillance de canal entre un émetteur (421g-424g ; 461d-464d) et un récepteur (441d-444d ; 481g-484g).
